# EUROPEAN PATENT SPECIFICATION

(11) **EP 4 292 887 B1**
(45) Date of publication and mention of the grant of the patent: **30.07.2025**
(21) Application number: 23382598.3
(22) Date of filing: 15.06.2023
(51) Int. Cl.: B60R 21/0136

(54) **IMPACT DETECTION SYSTEM**
AUFPRALLDETEKTIONSSYSTEM
SYSTÈME DE DÉTECTION D'IMPACT

(30) Priority: 16.06.2022 ES 202230534
(43) Date of publication of application: 20.12.2023
(73) Proprietor: Seat, S.A., 08760 Martorell (ES)
(72) Inventor: ARRUGA CANTALAPIEDRA, Ignacio, 08760 Martorell (ES); ALCANTARA CÁRDENAS, Esteban, 08760 Martorell (ES); ARAMBURU DEL BOZ, Norberto, 08760 Martorell (ES)
(74) Representative: Elzaburu S.L.P.

(56) References cited:
- EP-A1- 2 982 547
- WO-A1-2016/083291
- DE-A1- 102011 011 963
- DE-A1- 102013 016 239
- DE-A1- 102015 104 267
- US-A1- 2014 265 445
- US-A1- 2016 209 283
- US-A1- 2018 141 515

## Description

The object of the present invention is an impact detection system configured for the activation of an active hood system or hood raising system in order to protect a pedestrian in a case of impacting against or being run over by a vehicle.

The impact detection system object of the present invention allows to increase the sensitivity of the active hood activation sensor, thus allowing to improve the ability to discern if there has been an impact with a pedestrian that requires the activation of the hood to cause the raising thereof, or if there has been an impact with a small object (for example, a ball or a small mass) that does not require raising the hood.

The impact detection system object of the present invention is particularly applicable in the field of the industry dedicated to the design and manufacture of motor vehicles.

### Background of the invention and technical problem to solve

Currently, motor vehicles can incorporate an active hood system or hood raising system, designed to protect a pedestrian in the event that he or she is hit and/or run over by a vehicle, causing an impact between the person and the front of the vehicle. By raising the hood, the pedestrian is prevented from hitting the hard parts (for example, the vehicle's engine) located under the hood of the vehicle, reducing the negative consequences of being run over.

For the activation of the springs or pyrotechnic elements that initiate the raising of the hood, vehicles that comprise active hood systems incorporate a sensor located in the front part of the vehicle. This sensor generally comprises a tube filled with a liquid and connected to a pressure sensor (e.g., a hydrostatic pressure sensor) inside the tube. The tube is generally attached to the metal crosspiece, i.e., the metal component that extends from right to left side in a direction transverse to the direction of travel of the vehicle, said metal crosspiece being located behind the bumper of the vehicle. Said tube is usually embedded in a foam element, or "sandwiched" between the foam and the metal crosspiece. When there is an impact with a heavy object, the shock causes the strain of the bumper with the subsequent compression of the foam and the tube against the metal crosspiece. This compression causes the increase in pressure (e.g., hydrostatic pressure) inside the tube, which is detected by the pressure sensor connected to the tube. The pressure levels detected by the sensor are processed by a control unit, so that when a pressure signal having certain characteristics is detected, the mechanisms that cause the raising of hood are activated.

Document WO 2005115803 A1 describes a stress sensor located behind the bumper of a vehicle and linked to the metal crosspiece, as described in the preceding paragraph. Another example of such an impact detection system is disclosed by US 2016/209283 A1.

One drawback related to the stress sensors described above is that since they are located in a low area of the front of the vehicle (in correspondence with the metal crosspiece), they usually have low sensitivity and/or a low ability to discriminate between an impact against a person and an impact against another type of object, such as a bird or a ball. This becomes particularly relevant when the geometry of the vehicle's bumper is strongly concave according to a section made in a plane made up of the direction of travel of the vehicle and the vertical direction. In this situation, since the vehicle sensor is located in correspondence with the metal crosspiece (low and recessed area), is far from the most prominent or forward area of the bumper in the direction of travel of the vehicle (high area or "nose" of the bumper) and, therefore, away from the area of impact with a pedestrian in circumstances of being run over.

### Description of the invention

In order to solve the aforementioned drawbacks, the present invention relates to an impact detection system.

The impact detection system object of the present invention comprises a bumper of a vehicle, a foam piece and a sensing tube filled with a fluid and connected to a pressure sensor (e.g., a hydrostatic pressure sensor) inside the sensing tube.

In a novel manner, in the impact detection system object of the present invention, the sensing tube and the foam piece are fixed to a frame of the bumper. The sensing tube is embedded in the foam piece or arranged between the foam piece and the frame of the bumper.

By means of the impact detection system described above, it is possible to dispense with fixing the sensing tube to the metal crosspiece at the front of the vehicle, thereby allowing the sensing tube to be positioned in a way that allows to improve sensitivity to impacts of the vehicle with a person and to be arranged closer to an advanced area of the front of the vehicle, such as a high area of the bumper, this being particularly useful in vehicles that have a bumper with a strongly concave geometry, according to a section made in a plane made up of the direction of travel of the vehicle and the vertical direction.

The frame of the bumper is understood to be the structural part of said bumper, which provides rigidity against strain or other types of mechanical stress. Said frame is normally not seen from the outside of the vehicle, being covered by the outer skin or covering. Thus, the frame of the bumper is an element that offers little impact strength, but a lot of rigidity, tensile strength and hardness. The frame of the bumper may be made of a material such as polyamide (PA) or styrene maleic anhydride (SMA).

According to the invention. the frame of the bumper comprises a first area and a second area, where the rigidity of the first area is greater than the rigidity of the second area. In this way, it is possible to better control which areas of the bumper (and frame of the bumper) will deform first in the event of an impact with a person and to control how the bumper will deform. The first area can be made of a material different from the material of the second area.

The first area of the frame preferably comprises a bottom of the frame, where the term bottom refers to an area of the frame located rearward with respect to a direction of travel of the vehicle. This bottom of the frame is substantially perpendicular to the direction of travel of the vehicle.

The second area (less rigid area) of the frame may comprise at least a first portion with a thickness less than the thickness of the first area (more rigid area), said first portion forming a first type of weakness.

The second area (less rigid area) of the frame may comprise at least a second portion with material discontinuities (cavities or perforations that break the continuity of the frame in said second portion of the second area), said second portion forming a second type of weakness.

The frame of the bumper can also comprise angled surfaces open at an obtuse angle with respect to the first area of the frame. These angled surfaces can help to facilitate the strain of the skin of the bumper with respect to the first area of the frame.

In this way, the detection system comprises controlled strain areas generated by means of different embodiments, which may be complementary to each other. Therefore, said variation in rigidity can be achieved either by a change in material and/or a change in material thickness and/or a material discontinuity and/or an angled arrangement. In this way, the intention is for said second areas of the frame to be deformed with respect to the first area, so that the foam piece and the sensing tube are capable of being compressed against the first area of the frame of the bumper and avoiding the displacement of the entire frame towards the rear of the vehicle when an impact against the bumper occurs.

According to a first embodiment of the impact detection system, the foam piece is arranged between a skin (or outer surface) of the bumper and the first area (more rigid area) of the frame of the bumper, and where the foam piece is fixed to the first area of the frame of the bumper. In the present invention, skin of the bumper is understood to mean that component of the bumper seen from the outside of the vehicle, the purpose of which is to provide the bumper with a good visual appearance.

Preferably, according to this first embodiment, the frame of the bumper comprises the aforementioned angled surfaces open at an obtuse angle with respect to the first area of the frame.

Preferably, the foam piece extends in the direction of travel of the vehicle beyond the frame of the bumper (towards the skin of the bumper).

Also preferably, the impact detection system comprises at least one tab (or cover) configured to position and immobilize the foam piece at least in an azimuthal direction of the vehicle. This configuration is particularly indicated for the first embodiment.

The foam piece may comprise a plurality of projections configured and arranged to be housed in respective holes arranged in the first area and/or in the second area of the frame of the bumper to position the foam piece with respect to the frame.

According to a second embodiment of the impact detection system, the foam piece is arranged between a skin (or outer surface) of the bumper and the first area (more rigid area) of the frame of the bumper, and where the foam piece is fixed to the second area (less rigid area) of the frame of the bumper, there being a hollow space in the direction of travel of the vehicle between the foam piece and the first area of the frame of the bumper.

The impact detection system according to the invention does comprise attachment means between the skin of the bumper and the frame of the bumper, said attachment means being distanced from the foam piece to allow a strain of the skin of the bumper with respect to the frame of the bumper, such that during said strain of the skin of the bumper the foam piece is susceptible to being compressed against the frame of the bumper.

Thus, the second area of the bumper can be configured so that, during said strain of the skin of the bumper, the second area of the frame also deforms, allowing the compression of the foam piece against the frame of the bumper.

Likewise, the angled surfaces can be configured so that, during said strain of the skin of the bumper, said angled surfaces deform by increasing the obtuse angle with respect to the first area of the frame, allowing the compression of the foam piece against the frame of the bumper. Unlike the known state of the art, where the foam piece is mechanically linked to the metal crosspiece of the vehicle, according to the present invention, the foam is mechanically linked to the frame. In this embodiment, it is important to ensure that there is a relative strain or displacement between the skin of the bumper (the first element that comes into contact with the impactor or element that strikes the bumper) and the frame (element that provides structural rigidity to the bumper and secures the foam). It is important to note that the skin of the bumper and the frame of the bumper are part of the same component, and are fixed or linked to one another by a plurality of attachment means, such as fixing clips. It is necessary to prevent both components from presenting a single and uniform strain. If this were the case, the foam would not deform and would not compress against the frame of the bumper, so the pressure variation signals detected by the pressure sensor would not allow the impact against a person to be correctly detected. By linking the foam to the frame and including controlled strain areas, the foam is able to compress against said frame, thus allowing the sensor to experience pressure variations existing in the sensing tube.

The material for skin of the bumper is preferably a material that allows certain flexibility, but at the same time provides high impact strength. An example may be a polypropylene (PP) combined with an ethylene propylene diene rubber (EPDM). It may also be a material formed by a combination of PP, EPDM and talc.

### Brief description of the figures

The following figures have been included as part of the explanation of at least one embodiment of the invention.
Figure 1 shows a schematic perspective view of the conventional arrangement of a stress sensing tube between the metal crosspiece and a foam piece.
Figure 2 shows a schematic side view of a front end of a vehicle in which the bumper has a strongly concave geometry and where the advanced upper end in the direction of travel of the vehicle that first impacts a person's leg in the event of a running over that person has been marked.
Figure 3 shows a schematic perspective view of the position, with respect to the front end of a vehicle, of the impact detection system according to the present invention.
Figure 4a shows a schematic side section view of the position, with respect to the front end of a vehicle, of a first embodiment of the impact detection system according to the present invention.
Figure 4b shows a detail view of the impact detection system of Figure 4a.
Figure 4c shows a top schematic view of the impact detection system, according to section AA of Figure 4a.
Figure 5 shows a schematic view of the compression of the foam against the frame of the bumper, in the impact detection system of Figure 4a.
Figure 6 shows a schematic side section view of a variant of the first embodiment of the impact detection system according to the present invention.
Figure 7 shows a schematic side section view of a variant of the first embodiment of the impact detection system according to the present invention, wherein the tabs or covers of the frame to immobilize the foam piece are observed.
Figure 8 shows a schematic upper section view of a second embodiment of the impact detection system according to the present invention.

### Detailed description

As mentioned above, the present invention relates to an impact detection system.

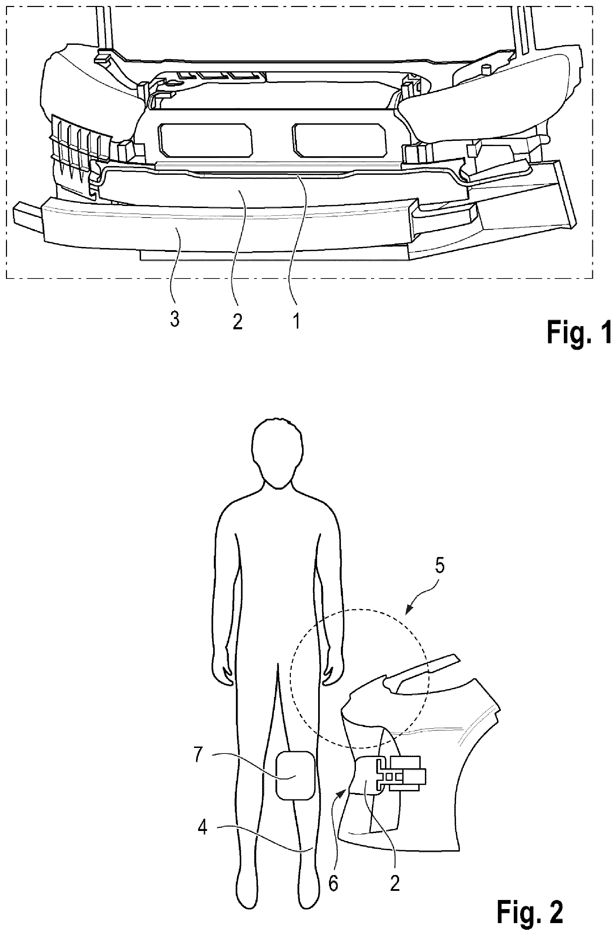

Figure 1 shows a stress sensor for vehicle bumpers (6), according to the state of the art. Figure 1 shows the sensing tube (1) located in correspondence with the metal crosspiece (2) on the front of the vehicle, where the sensing tube (1) is sandwiched between the metal crosspiece (2) and a foam piece (3). Thus, the foam piece (3) is susceptible to being compressed against the metal crosspiece (2), causing a variation in pressure (e.g., hydrostatic pressure) inside the sensing tube (1).

In the case of vehicles with a front or bumper (6) that has a strongly concave geometry, as shown schematically in Figure 2, the arrangement of the sensing tube (1) in the metal crosspiece (2) of the front of the vehicle means that the sensing tube (1) is far from the advanced area (5) of the front of the vehicle, according to the direction and sense of travel of the vehicle, which is the area that first impacts against a person (4) in the event of running a person over (Figure 2 very schematically represents the leg of a person (4)). Thus, depending on the constructive features of the vehicle, the metal crosspiece (2) could be arranged in the lower area or central area of the bumper (6), the strain of the bumper (6) occurring later in this area than in the more advanced area of said bumper (6).

Thus, in the situation described in the previous paragraph, in the event of a person (4) being run over, the bumper (6) would suffer a strain in correspondence with the advanced area (5) of the front of the vehicle, without the sensing tube (1) detecting anything until the strain of the bumper (6) extends to the recessed area in correspondence with the metal crosspiece (2).

In these circumstances, there is even the possibility that, due to the energy absorbed in the strain of the advanced area (5) of the front of the vehicle, the remaining energy is not enough to deform the recessed area located in correspondence with the metal crosspiece (2) and, therefore, the sensing tube (1) fails to detect the impact, thus failing to activate the hood raising system. In other circumstances, the remaining energy could deform the recessed area located in correspondence with the metal crosspiece (2) but with a value lower than predetermined values, so that an impact pertaining to an object other than an impact of a person could be determined.

Alternatively or in addition to the above, there is the possibility that the collision of the vehicle with a mass (7) of a smaller size (for example, a ball or a bird) will reach the recessed area of the bumper (6) of the vehicle, in correspondence with the metal crosspiece (2), causing the strain of the bumper (6) in that recessed area, being detected by the sensing tube (1) and activating the raising of the hood. This would lead to the contradiction that the hood raising system would not work (it would not raise the hood) in the event of a person (4) being run over, but it would work in the event of a collision with a mass (7) that should not give rise to the raising of the hood.

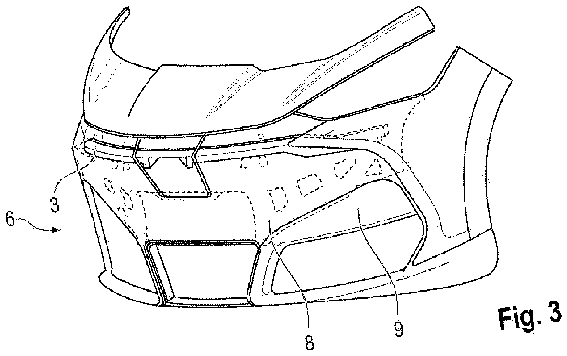

For this reason, as shown in Figure 3, in the impact detection system object of the present invention, the sensing tube (1) is not fixed to the metal crosspiece (2) of the front of the vehicle, but rather to the frame (8) of the bumper (6). This makes it possible for the sensing tube (1) to be located in correspondence with the advanced area (5) of the front of the vehicle, i.e., the most prominent area or the one that would first impact the legs of a pedestrian who, according to a strongly concave geometry of the bumper (6), occurs in the highest area of said bumper (6).

Thus, according to the present invention, the sensing tube (1) is located (internally) behind the skin (9) of the bumper (6), between a foam piece (3) and the frame (8) of the bumper (6).

Figure 3 shows the frame (8) of the bumper (6), by means of a dashed line, being located behind the skin (9) of the bumper (6).

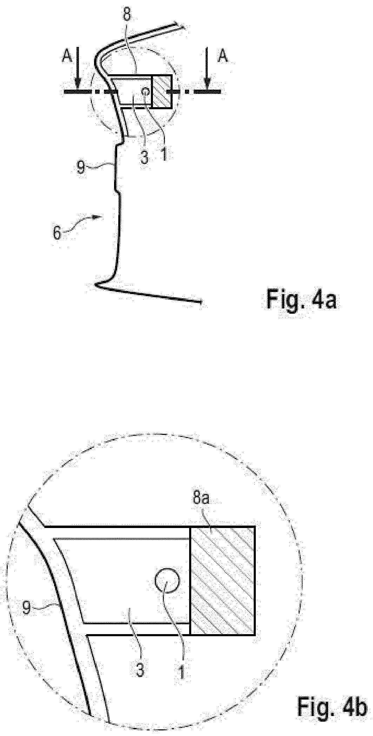

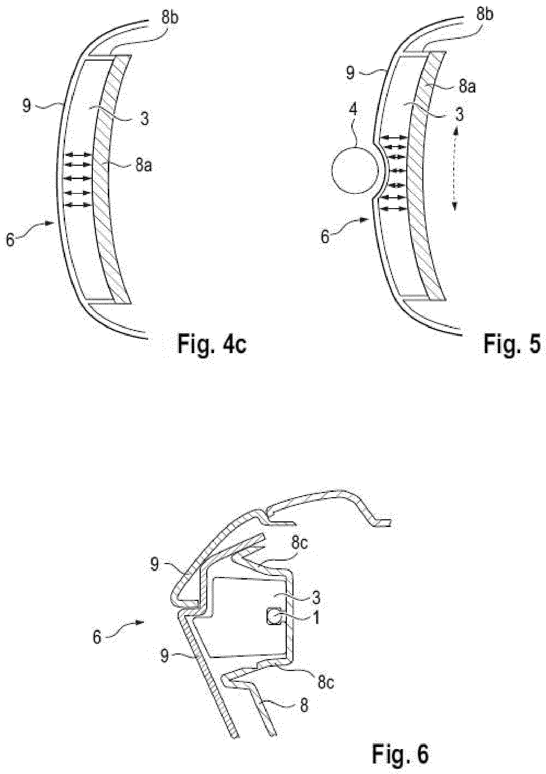

Figure 4a, Figure 4b and Figure 4c show the way in which the sensing tube (1) is arranged, according to a first embodiment of the impact detection system object of the present invention.

According to the first embodiment of the impact detection system, the sensing tube (1) and the foam piece (3) are arranged between the skin (9) of the bumper (6) of the vehicle, and there may be direct contact or space for air between said skin (9) and the foam piece (3), and a first area (8a) or bottom of the frame (8) of the bumper (6).

Figure 4a shows a sectional view of the bumper (6), where the section is taken according to a plane made up of the direction of travel of the vehicle and the vertical direction, at an intermediate coordinate Y0 (according to a Y coordinate axis in the direction transverse to the direction of travel of the vehicle).

Figure 4b shows a detail of the anchoring or fixing of the sensing tube (1) and of the foam piece (3) to the first area (8a) or bottom of the frame (8) of the bumper (6). It is observed that there is direct contact between the foam piece (3) and the frame (8) of the bumper (6).

Figure 4c shows a top section view, according to the section plane AA indicated in Figure 4a.

The frame (8) of the bumper (6) is a piece of plastic that gives rigidity and consistency to the bumper (6) (it is like the internal skeleton of the bumper (6)), arranged behind the skin (9) of the bumper (6), allowing the bumper (6) to only deform in the event of strong impacts and not deform in the event of small stresses or support on same.

To ensure proper operation of the impact detection system, it must be ensured that in the event of a frontal impact against the bumper (6) of the vehicle, the skin (9) of the bumper (6) is deformed by pressing the foam piece (3) and the sensing tube (1) against the frame (8), without the first area (8a) or bottom of the frame (8) or the part of the frame (8) to which the sensing tube (1) is fixed being displaced, at least during the start of the impact, integrally with the strain or displacement of said skin (9) of the bumper (6). In this way it is guaranteed that the foam piece (3) and, therefore, the sensing tube (1) will experience strain during the impact.

In order to ensure that the assembly of the skin (9) of the bumper (6) and the frame (8) of the bumper (6) are not displaced backwards as a monolithic assembly or a single assembly in the event of a frontal impact of an object or a person (4) against the bumper (6) of the vehicle, the frame (8) is designed so that some parts of the frame (8) present more rigidity and/or robustness than other parts of the frame (8). Thus, the first area (8a) or bottom of the frame (8) and/or the part or parts of the frame (8) configured for fixing the sensing tube (1) is/are designed with greater rigidity than a second area (8b) of the frame (8) of the bumper (6), thus facilitating that in the event of a frontal impact of an object or a person (4) against the bumper (6) of the vehicle, the skin (9) of the bumper is initially deformed together with the less rigid parts of the frame (8) (the second area (8b) of the frame (8)), with the geometry of the more rigid parts of the frame (8) (the first area (8a) of the frame (8)), specifically the bottom and/or the part of the frame (8) configured for fixing the sensing tube (1), remaining unchanged.

The different rigidity of the parts of the frame (8) can be achieved by means of different thicknesses in different parts of the frame and/or by means of material discontinuities in different parts of the frame (8), thus generating areas of weakness in the frame (8) that facilitate their strain in said areas of weakness. In this way, controlled strain points are achieved that allow, particularly those parts of the frame (8) that extend towards the skin (9) of the bumper (6), to deform and allow the compression of the foam piece (3), while the most rigid parts of the frame (8) (the first area (8a) of the frame (8)), specifically the bottom and/or the part of the frame (8) configured for fixing the sensing tube (1), present a relative displacement with respect to said skin (9) of the bumper (6), said relative displacement being an displacement of approximation between both.

Figure 5 shows an example of the desired situation, wherein after an impact of a person (4) against the bumper (6) of a vehicle, a strain of the skin (9) and the less rigid second area (8b) of the frame (8) occurs, the foam piece (3) thus being deformed against the more rigid first area (8a) of the frame (8), the sensing tube (1) thus pressing against the first area (8a) of the frame (8).

Figure 4c shows a set of arrows in the X direction (direction of travel/reverse movement of the vehicle). These arrows represent precisely the situation to be avoided, that is, in the event of a frontal impact against the bumper (6) of the vehicle, the skin (9) and frame (8) of the bumper (6) are displaced backwards (in the direction opposite to the direction of travel of the vehicle) as a monolithic assembly, since this would prevent the foam piece (3) and the sensing tube (1) from experiencing strain.

Figure 6 shows a variant of the first embodiment of the impact detection system. According to this variant, the foam piece (3) is fixed to the first area (8a) or bottom of the frame (8) of the bumper (6), and the frame (8) of the bumper has angled surfaces (8c) open at an obtuse angle with respect to the first area (8a) or bottom of the frame (8). Likewise, the foam piece (3) extends beyond the frame (8) in an X direction (direction of travel of the vehicle). In this way, although the foam piece (3) is trapped or enclosed between the skin (9) of the bumper (6) and the frame (8) of the bumper (6), the geometry of the frame with its angled surfaces (8c) in an obtuse angle with respect to the first area (8a) or bottom allow the skin (9) to deform in the event of an impact by a person (4) or heavy object against the advanced area (5) of the front of the vehicle, also allowing the strain of the foam piece (3) without the need for the entire frame (8) to deform and absorb energy during the start of the impact.

As can be seen in Figure 6, the angled surfaces (8c) may comprise a thickness less than the thickness of the first area (8a) or bottom of the frame (8). In any case, the first area (8a) or bottom of the frame has a rigidity greater than the rigidity of the angled surfaces (8c). Likewise, the angled surfaces (8c) may comprise specific areas or sections wherein the material thickness is abruptly reduced (as can be seen in the angled surface (8c) located below the foam piece (3) in Figure 6. This abrupt reduction in material thickness creates an area of weakness in the angled surface(s) (8c).

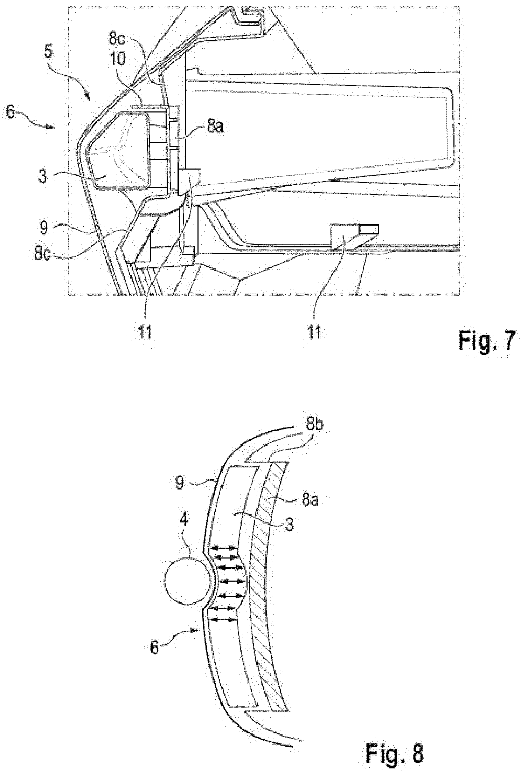

As can be seen in Figure 7, the system may comprise tabs (10) or covers, configured to correctly position and immobilize the foam piece (3) in one direction (preferably, at least in an azimuthal direction) or two directions (preferably two mutually perpendicular directions) transverse to the direction of travel of the vehicle.

Likewise, as shown in Figure 7, the foam piece (3) may comprise a plurality of projections (11) configured to be housed in respective holes in the frame (8) of the bumper (6) to fix the foam piece (3) to the frame (8).

Figure 8 schematically shows a second embodiment of the impact detection system. In this second embodiment, the first area (8a) or bottom of the frame (8) is far from the skin (9) of the bumper (6), and the foam piece (3) (and optionally also the sensing tube (1)) is fixed to the second area (8b) of the frame (8) (i.e., to a part or parts that are less rigid than the bottom or first area (8a) of the frame (8)), there being a hollow space in the direction of travel of the vehicle between the foam piece (3) and the first area (8a) of the frame (8) of the bumper (6).

In this second embodiment, when an object or person (4) impacts against the bumper (6) of the vehicle, the skin (9) is initially deformed together with the second area (8b) of the frame (8), causing a strain of the foam piece (3) against the first area (8a) or more rigid bottom of the frame (8).

## Claims

1. An impact detection system comprising a bumper (6) of a vehicle, a foam piece (3) and a sensing tube (1) filled with a fluid and connected to a pressure sensor inside the sensing tube (1) and configured to detect pressure variations existing in the sensing tube (1), wherein the sensing tube (1) and the foam piece (3) are fixed to a frame (8) of the bumper (6) and where the sensing tube (1) is embedded in the foam piece (3) or arranged between the foam piece (3) and the frame (8) of the bumper (6); wherein the frame (8) of the bumper (6) comprises a first area (8a) and a second area (8b), where the rigidity of the first area (8a) is greater than the rigidity of the second area (8b);
wherein the foam piece (3) is arranged between a skin (9) of the bumper (6) and the first area (8a) of the frame (8) of the bumper (6);
wherein the impact detection system comprises attachment means between the skin (9) of the bumper (6) and the frame (8) of the bumper (6), said attachment means being distanced from the foam piece (3) to allow a strain of the skin (9) of the bumper (6) with respect to the frame (8) of the bumper (6), such that during said strain of the skin (9) of the bumper (6) the foam piece (3) is susceptible to being compressed against the frame (8) of the bumper (6), and;
such that during said strain of the skin (9) of the bumper (6), the second area (8b) of the bumper (6) is configured to deform, allowing the compression of the foam piece (3) against the frame (8) of the bumper (6).

2. The impact detection system according to claim 1, **characterized in that** the second area (8b) of the frame (8) comprises at least a first portion with a thickness less than the thickness of the first area (8a), said first portion forming a first type of weakness.

3. The impact detection system according to claim 1 or 2, **characterized in that** the second area (8b) of the frame (8) comprises at least a second portion with material discontinuities, said second portion forming a second type of weakness.

4. The impact detection system according to any of claims 1 to 3, **characterized in that** the frame (8) of the bumper (6) comprises angled surfaces (8c) open at an obtuse angle with respect to the first area (8a) of the frame (8).

5. The impact detection system according to any of claims 1 to 4, **characterized in that** the foam piece (3) is fixed to the first area (8a) of the frame (8) of the bumper (6).

6. The impact detection system according to any of the preceding claims, **characterized in that** the foam piece (3) extends in the direction of travel of the vehicle beyond the frame (8) of the bumper (6).

7. The impact detection system according to any of the previous claims, **characterized in that** the frame (8) comprises at least one tab (10) configured to position and immobilize the foam piece (3) at least in an azimuthal direction of the vehicle.

8. The impact detection device according to any one of claims 1 to 7, **characterized in that** the foam piece (3) comprises a plurality of projections (11) configured and arranged to be housed in respective holes arranged in the first area (8a) and/or in the second area (8b) of the frame (8) of the bumper (6) to position said foam piece (3) with respect to said frame (8).

9. The impact detection system according to any of claims 1 to 4, **characterized in that** the foam piece (3) is fixed to the second area (8b) of the frame (8) of the bumper (6), there being a hollow space in the direction of travel of the vehicle between the foam piece (3) and the first area (8a) of the frame (8) of the bumper (6).

10. The impact detection system according to claim 4, **characterized in that** during said strain of the skin (9) of the bumper (6), the angled surfaces (8c) are configured to deform by increasing the obtuse angle with respect to the first area (8a) of the frame (8), allowing the compression of the foam piece (3) against the frame (8) of the bumper (6).

## Patentansprüche

1. Aufprallerkennungssystem, umfassend einen Stoßfänger (6) eines Fahrzeugs, ein Schaumstoffstück (3) und ein Sensorrohr (1), das mit einem Fluid gefüllt ist und mit einem Drucksensor im Inneren des Sensorrohrs (1) verbunden ist und konfiguriert ist, um Druckschwankungen zu erkennen, die in dem Sensorrohr (1) vorhanden sind, wobei das Sensorrohr (1) und das Schaumstoffstück (3) an einem Rahmen (8) des Stoßfängers (6) befestigt sind und wobei das Sensorrohr (1) in das Schaumstoffstück (3) eingebettet oder zwischen dem Schaumstoffstück (3) und dem Rahmen (8) des Stoßfängers (6) angeordnet ist; wobei der Rahmen (8) des Stoßfängers (6) einen ersten Bereich (8a) und einen zweiten Bereich (8b) umfasst, wobei die Steifigkeit des ersten Bereichs (8a) größer als die Steifigkeit des zweiten Bereichs (8b) ist;
wobei das Schaumstoffstück (3) zwischen einer Außenhaut (9) des Stoßfängers (6) und dem ersten Bereich (8a) des Rahmens (8) des Stoßfängers (6) angeordnet ist;
wobei das Aufprallerkennungssystem Anbringungsmittel zwischen der Außenhaut (9) des Stoßfängers (6) und dem Rahmen (8) des Stoßfängers (6) umfasst, wobei die Anbringungsmittel von dem Schaumstoffstück (3) beabstandet sind, um eine Belastung der Außenhaut (9) des Stoßfängers (6) in Bezug auf den Rahmen (8) des Stoßfängers (6) derart zu ermöglichen, dass das Schaumstoffstück (3) während der Belastung der Außenhaut (9) des Stoßfängers (6) imstande ist, gegen den Rahmen (8) des Stoßfängers (6) komprimiert zu werden, und;
derart, dass während der Belastung der Außenhaut (9) des Stoßfängers (6) der zweite Bereich (8b) des Stoßfängers (6) konfiguriert ist, um sich zu verformen, wodurch die Kompression des Schaumstoffstücks (3) gegen den Rahmen (8) des Stoßfängers (6) ermöglicht wird.

2. Aufprallerkennungssystem nach Anspruch 1,
**dadurch gekennzeichnet, dass** der zweite Bereich (8b) des Rahmens (8) mindestens einen ersten Abschnitt mit einer geringeren Dicke als die Dicke des ersten Bereichs (8a) umfasst, wobei der erste Abschnitt eine erste Art von Schwachstelle ausbildet.

3. Aufprallerkennungssystem nach Anspruch 1 oder 2,
**dadurch gekennzeichnet, dass** der zweite Bereich (8b) des Rahmens (8) mindestens einen zweiten Abschnitt mit Materialdiskontinuitäten umfasst, wobei der zweite Abschnitt eine zweite Art von Schwachstelle ausbildet.

4. Aufprallerkennungssystem nach einem der Ansprüche 1 bis 3,
**dadurch gekennzeichnet, dass** der Rahmen (8) des Stoßfängers (6) abgewinkelte Oberflächen (8c) aufweist, die in einem stumpfen Winkel in Bezug auf den ersten Bereich (8a) des Rahmens (8) offen sind.

5. Aufprallerkennungssystem nach einem der Ansprüche 1 bis 4,
**dadurch gekennzeichnet, dass** das Schaumstoffstück (3) an dem ersten Bereich (8a) des Rahmens (8) des Stoßfängers (6) befestigt ist.

6. Aufprallerkennungssystem nach einem der vorstehenden Ansprüche, **dadurch gekennzeichnet, dass** sich das Schaumstoffstück (3) in der Fahrtrichtung des Fahrzeugs über den Rahmen (8) des Stoßfängers (6) hinaus erstreckt.

7. Aufprallerkennungssystem nach einem der vorstehenden Ansprüche, **dadurch gekennzeichnet, dass** der Rahmen (8) mindestens eine Lasche (10) umfasst, die konfiguriert ist, um das Schaumstoffstück (3) mindestens in einer Azimutrichtung des Fahrzeugs zu positionieren und zu blockieren.

8. Aufprallerkennungsvorrichtung nach einem der Ansprüche 1 bis 7,
**dadurch gekennzeichnet, dass** das Schaumstoffstück (3) eine Vielzahl von Vorsprüngen (11) umfasst, die konfiguriert und angeordnet sind, um in entsprechenden Löchern untergebracht zu werden, die in dem ersten Bereich (8a) und/oder in dem zweiten Bereich (8b) des Rahmens (8) des Stoßfängers (6) angeordnet sind, um das Schaumstoffstück (3) in Bezug auf den Rahmen (8) zu positionieren.

9. Aufprallerkennungssystem nach einem der Ansprüche 1 bis 4,
**dadurch gekennzeichnet, dass** das Schaumstoffstück (3) an dem zweiten Bereich (8b) des Rahmens (8) des Stoßfängers (6) befestigt ist, wobei in der Fahrtrichtung des Fahrzeugs zwischen dem Schaumstoffstück (3) und dem ersten Bereich (8a) des Rahmens (8) des Stoßfängers (6) ein Hohlraum vorhanden ist.

10. Aufprallerkennungssystem nach Anspruch 4,
**dadurch gekennzeichnet, dass** während der Belastung der Außenhaut (9) des Stoßfängers (6) die abgewinkelten Oberflächen (8c) konfiguriert sind, um sich durch Vergrößern des stumpfen Winkels in Bezug auf den ersten Bereich (8a) des Rahmens (8) zu verformen, wodurch die Kompression des Schaumstoffstücks (3) gegen den Rahmen (8) des Stoßfängers (6) ermöglicht wird.

## Revendications

1. Système de détection d'impact comprenant un pare-chocs (6) d'un véhicule, une pièce en mousse (3) et un tube de détection (1) rempli d'un fluide et connecté à un capteur de pression à l'intérieur du tube de détection (1) et configuré pour détecter des variations de pression existant dans le tube de détection (1), dans lequel le tube de détection (1) et la pièce en mousse (3) sont fixés à un cadre (8) du pare-chocs (6) et où le tube de détection (1) est encastré dans la pièce en mousse (3) ou agencé entre la pièce en mousse (3) et le cadre (8) du pare-chocs (6) ; dans lequel le cadre (8) du pare-chocs (6) comprend une première zone (8a) et une seconde zone (8b), la rigidité de la première zone (8a) étant supérieure à la rigidité de la seconde zone (8b) ;
dans lequel la pièce en mousse (3) est agencée entre une peau (9) du pare-chocs (6) et la première zone (8a) du cadre (8) du pare-chocs (6) ;
dans lequel le système de détection d'impact comprend des moyens de fixation entre la peau (9) du pare-chocs (6) et le cadre (8) du pare-chocs (6), lesdits moyens de fixation étant distants de la pièce en mousse (3) pour permettre une déformation de la peau (9) du pare-chocs (6) par rapport au cadre (8) du pare-chocs (6), de telle sorte que pendant ladite déformation de la peau (9) du pare-chocs (6), la pièce en mousse (3) est susceptible d'être comprimée contre le cadre (8) du pare-chocs (6), et ;
de telle sorte que, pendant ladite déformation de la peau (9) du pare-chocs (6), la seconde zone (8b) du pare-chocs (6) est configurée pour se déformer, permettant la compression de la pièce en mousse (3) contre le cadre (8) du pare-chocs (6).

2. Système de détection d'impact selon la revendication 1,
**caractérisé en ce que** la seconde zone (8b) du cadre (8) comprend au moins une première partie d'épaisseur inférieure à l'épaisseur de la première zone (8a), ladite première partie formant un premier type de faiblesse.

3. Système de détection d'impact selon la revendication 1 ou 2,
**caractérisé en ce que** la seconde zone (8b) du cadre (8) comprend au moins une seconde partie avec des discontinuités de matériau, ladite seconde partie formant un second type de faiblesse.

4. Système de détection d'impact selon l'une quelconque des revendications 1 à 3, **caractérisé en ce que** le cadre (8) du pare-chocs (6) comprend des surfaces angulaires (8c) ouvertes à un angle obtus par rapport à la première zone (8a) du cadre (8).

5. Système de détection d'impact selon l'une quelconque des revendications 1 à 4, **caractérisé en ce que** la pièce en mousse (3) est fixée à la première zone (8a) du cadre (8) du pare-chocs (6).

6. Système de détection d'impact selon l'une quelconque des revendications précédentes, **caractérisé en ce que** la pièce en mousse (3) s'étend dans la direction de déplacement du véhicule au-delà du cadre (8) du pare-chocs (6).

7. Système de détection d'impact selon l'une quelconque des revendications précédentes, **caractérisé en ce que** le cadre (8) comprend au moins une languette (10) conçue pour positionner et immobiliser la pièce en mousse (3) au moins dans une direction azimutale du véhicule.

8. Dispositif de détection d'impact selon l'une quelconque des revendications 1 à 7, **caractérisé en ce que** la pièce en mousse (3) comprend une pluralité de saillies (11) conçues et agencées pour être logées dans des trous respectifs agencés dans la première zone (8a) et/ou dans la seconde zone (8b) du cadre (8) du pare-chocs (6) afin de positionner ladite pièce en mousse (3) par rapport audit cadre (8).

9. Système de détection d'impact selon l'une quelconque des revendications 1 à 4, **caractérisé en ce que** la pièce en mousse (3) est fixée à la seconde zone (8b) du cadre (8) du pare-chocs (6), un espace creux se trouvant dans la direction de déplacement du véhicule entre la pièce en mousse (3) et la première zone (8a) du cadre (8) du pare-chocs (6).

10. Système de détection d'impact selon la revendication 4,
**caractérisé en ce que** lors de ladite déformation de la peau (9) du pare-chocs (6), les surfaces angulaires (8c) sont conçues pour se déformer en augmentant l'angle obtus par rapport à la première zone (8a) du cadre (8), permettant la compression de la pièce en mousse (3) contre le cadre (8) du pare-chocs (6).
